# EUROPEAN PATENT APPLICATION

(11) **EP 2 977 940 A1**
(43) Date of publication of application: **27.01.2016**
(21) Application number: 15176235.8
(22) Date of filing: 10.07.2015
(51) Int. Cl.: G06Q 10/06

(54) **PRODUCT PRODUCTION PLANNING METHOD**

(30) Priority: 22.07.2014 JP 2014149299
(71) Applicant: Toyota Jidosha Kabushiki Kaisha, Toyota-shi, Aichi 471-8571 (JP)
(72) Inventor: INOUE, Kei, Toyota-shi Aichi 471-8571 (JP); ISOGAI, Hisashi, Toyota-shi Aichi 471-8571 (JP)
(74) Representative: TBK

(57) **Abstract**

An accurate production plan can be achieved by enabling a combination constraint among grades and specifications to be considered so that the composition ratios of the determined grades and specifications and the actual composition ratios are consistent with each other. A method for designing a production plan on a car model in which a plurality of grades are set and a plurality of specifications for a plurality of categories are set for each of the grades by determining composition ratios of the grades and composition ratios of the specifications for the categories, includes: generating all-specifications-combination information which is information generated by combining the specifications in every combinable pattern; and calculating, by determining a composition ratio of any one of the grades, upper and lower limits of the composition ratio of an equipment, which is the specification related to and other than the determined grade, based on the all-specifications-combination information.

## Description

### Technical Field

The present invention relates to a technique including a product production planning method.

### Background Art

For a product in which a plurality of grades (ranks) are set, it is common that a plurality of specifications are further set for each of the grades.

For example, in the field of car, it is common that a plurality of grades different in price are set for a car model. The car is classified into a plurality of categories such as an engine, a transmission, an underbody component and an interior, which are components of the car, and a plurality of specifications are set for each of the categories. In addition, specifications which can be selected in each category are made to be different in each grade. Thereby, the grades are differentiated. It is also common, in the field of car, that the grade settings and the contents of specification are modified for different countries.

In production planning for such a product in which the plurality of grades and the plurality of specifications are set, there is known a method for designing a production plan (production planning method) by determining a composition ratio of a production volume in each grade and determining a composition ratio of each specification in each category. For example, such a production planning method is disclosed in JP-A 2003-67030.

In the conventional production planning method described in JP-A 2003-67030, the composition ratio of each grade and the composition ratio of each specification are determined based on experience and estimation.

### Summary of Invention

### Problem to Be Solved By the Invention

In the conventional production planning method, the composition ratio of each grade and the composition ratio of each specification are individually determined based on experience and estimation. Therefore, the determined composition ratios of the specifications are not consistent with the actual composition ratios of the specifications, in some cases. There are combination constraints (relationships) among the specifications, and the constraints have not only direct relationships between the specifications but also indirect constraints via other specifications. In the conventional production planning method, since such constraints are not all taken into consideration, the composition ratios of the grades and the specifications having been input are not consistent with each other.

The present invention has been made in view of the current problems described above, and the object of the present invention is to provide a production planning method in which it is possible for the combination constraints among the grades and the specifications to be taken into consideration so that the composition ratios of the grades and the specifications having been determined can be consistent with the actual composition ratios, thereby achieving a highly accurate production plan.

### Means for Solving the Problem

The problems to be solved by the present invention are described above, and means for solving the problems will be described below.

A first aspect of the invention is a product production planning method for designing a production plan on a product in which a plurality of grades are set and a plurality of specifications for a plurality of categories are set for each grade, by determining composition ratios of the plurality of grades and composition ratios of the plurality of specifications for the plurality of categories. The method includes: generating all-specifications-combination information which is information generated by combining the grades and the specifications in every combinable pattern; and calculating, by determining a composition ratio of any one of the grades or any one of the specifications, upper limits and lower limits of composition ratios of the grade and the specification which relate to and are other than the determined grade or specification, based on the all-specifications-combination information.

Preferably, the upper limits and the lower limits of the composition ratios of the grade and the specification which are based on the all-specifications-combination information and which relate to and are other than the determined grade or specification are calculated by converting the all-specifications-combination information to a linear programming problem and by narrowing a solution space.

### Effects of the Invention

As an advantageous effect of the present invention, the following effect is provided.

With the present invention, the upper limits and the lower limits of the composition ratios of other grades and other specifications are calculated based on the all-specifications-combination information, and a composition ratio is determined within that range. Thus, consistency of the composition ratios can be secured.

Accordingly, on a product in which a plurality of grades are set and a plurality of specifications are further set for the grades, an accurate production plan can be achieved.

### Brief Description of Drawings

Fig. 1 shows a configuration of a product to which a production planning method according to an embodiment of the present invention is applied.
Fig. 2 shows a configuration of a car which is a product.
Fig. 3 shows a production plan designing system used for the product production planning method according to the embodiment of the present invention.
Fig. 4 is a flowchart showing a flow of the product production planning method according to the embodiment of the present invention.
Figs. 5A to 5C show a calculation method in the product production planning method according to the embodiment of the present invention, where Fig. 5A shows a mode of converting all-specifications-combination information to variables, Fig. 5B shows a state in which all-specifications-combination information is converted to a linear programming problem, and Fig. 5C shows a state in which a solution space is narrowed down.
Fig. 6 shows a state (initial state) of calculation of composition ratios in accordance with the product production planning method according to the embodiment of the present invention.
Fig. 7 shows the state (one composition ratio has been input) of calculation of the composition ratios in accordance with the product production planning method according to the embodiment of the present invention.
Fig. 8 shows the state (one composition ratio has been re-entered) of calculation of the composition ratios in accordance with the product production planning method according to the embodiment of the present invention.
Fig. 9 shows the state (one composition ratio has been re-entered again) of calculation of the composition ratios in accordance with the product production planning method according to the embodiment of the present invention.

### Description of Embodiments

An embodiment of the present invention will be described.

First, a description will be given of a configuration of a product to which a production planning method according to an embodiment of the present invention is applied.

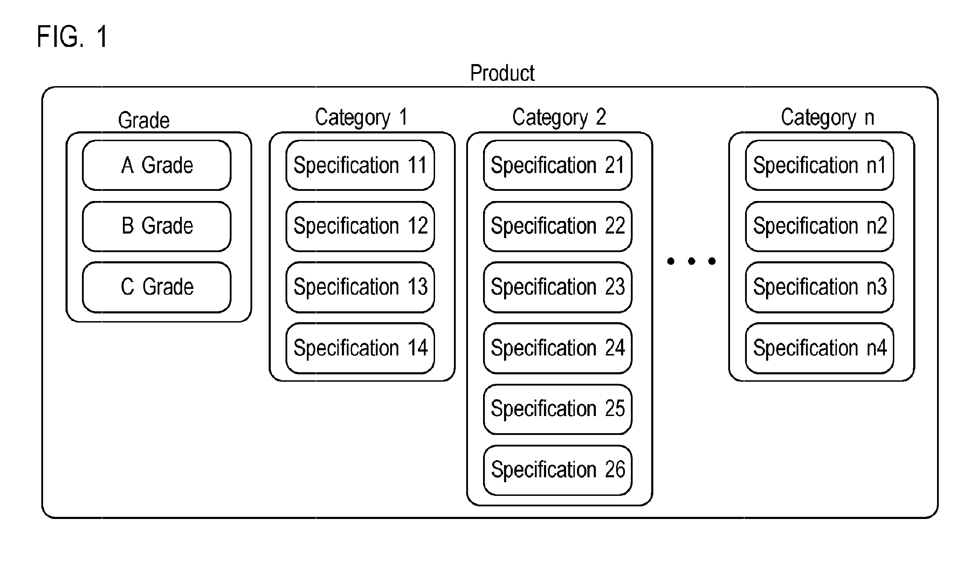

For the product to which the production planning method according to the embodiment of the present invention is applied, there are set a plurality of grades as shown in Fig. 1, and in addition, there are set a plurality of categories which are components of the product. Here, the diagram shows, as an example, a case where three grades of A grade to C grade and n-number of categories of a category 1 to a category n are set for the product.

A specification is set for each category, and in this embodiment, as an example, there is shown a case where four specifications are set for the category 1, six specifications are set for the category 2, and four specifications are set for the category n.

Note that one or more specifications are set for each category.

A specification is selected in each category for the product, and thus the product specifications of the whole product are fixed.

A description will be given, using an example, of a case where the product is a car.

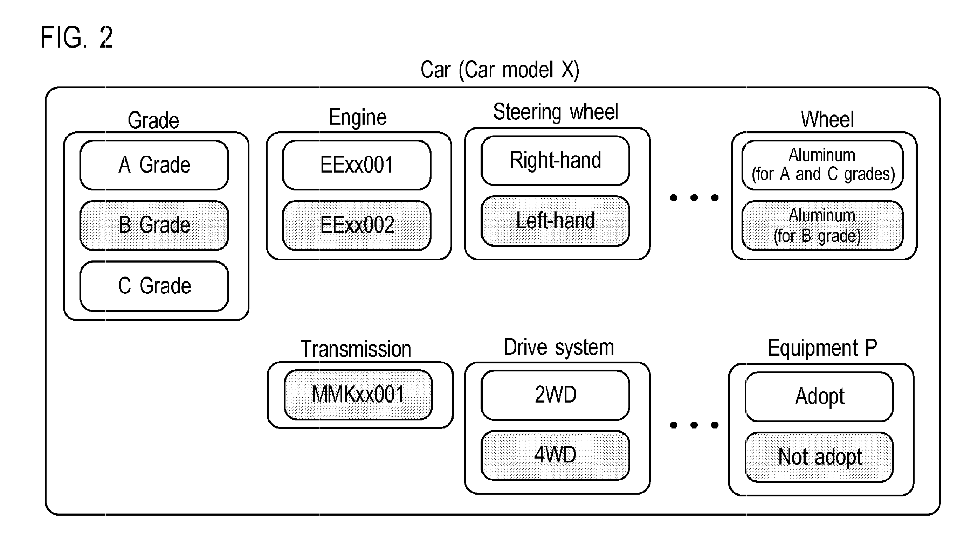

As shown in Fig. 2, for a car (car model X) which is the product to which the production planning method according to the embodiment of the present invention is applied, there are set A grade to C grade (three grades) which are in different price ranges.

In the case of the car model X, different equipment is available for different grades, and a specification corresponding to each grade is selected for each of categories such as engine, transmission, steering wheel, drive system, wheel, and equipment P.

Some specifications are automatically determined when a grade is determined, but some specifications are always selected regardless of the grade.

For example, as shown in Fig. 2, when B grade is selected for the car model X, "aluminum (for B grade)" is determined as the specification of the wheel. Moreover, the specification "MMKxx001" is always selected for the transmission of any grade of the car model X.

In other words, when a grade and a specification of the car (car model X) are combined, there is a constraint (relationship) between the grade and the specification.

Further, since different specifications of optional equipment are available for the same "B grade" in some cases, a unique specification is not fixed for all the categories even when a "grade" is selected.

The product production planning method according to the embodiment of the present invention is to be applied to a product which has the combination constraints (relationships) between the grades and the specifications as described above, and is characterized in that a production plan can be designed accurately even if there are such constraints.

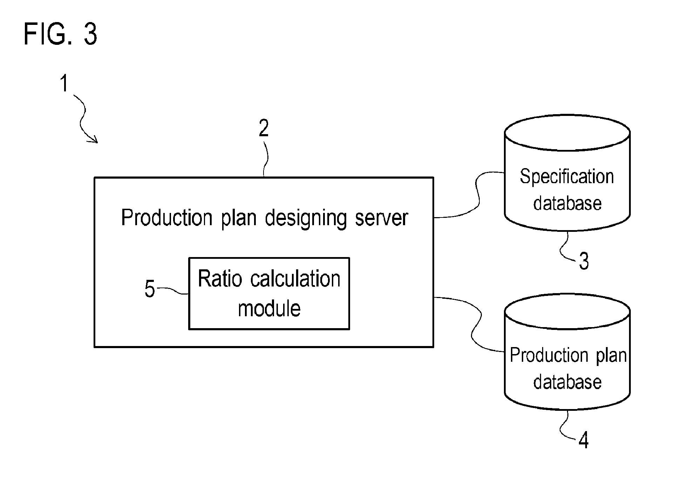

With reference to Fig. 3 to Fig. 9, a description will be given of a series of flow of the product production planning method according to the embodiment of the present invention.

The description will be given, using an example, of a case where a product which is a production object is a car (see Fig. 2).

The product production planning method according to the embodiment of the present invention can be achieved by a production plan designing system 1 as shown in Fig. 3.

As shown in Fig. 3, the production plan designing system 1 is configured with a production plan designing server 2, a specification database 3, a production plan database 4, and the like.

The production plan designing server 2 is equipped with: a calculation device configured with a CPU, a ROM, a RAM, and the like; a display device configured with a display and the like; an input device configured with a keyboard, a touch panel, and the like; a storage device for storing a program and the like; and other devices.

The production plan designing server 2 is also equipped with a ratio calculation module 5 having a program for calculating a composition ratio and other programs. As the production plan designing server 2, a general-purpose personal computer or the like can be employed.

The specification database 3 stores specification definition information J1 which is the information in which specific contents of each grade and each category set as shown in Fig. 2 are written, and stores combination constraint information J2 which is the information in which constraint contents to be used in combining each grade and each specification are written.

The specification definition information J1 is the information made up of specific specifications and code numbers representing specifications, for example.

The combination constraint information J2 is the information in which constraint contents to be used in combining the specifications set as shown in Fig. 2 are written.

The combination constraint information J2 is the information including, for example, all the constraint contents defined as follows:
(1) a specification a1 is always combined with another specification b1;
(2) a specification a2 is combined with one of other specification b2 and b3; and
(3) a specification a3 is combined with a specification other than another specification b2.

Further, as the combination constraint information J2, the relationship between a specification and a component to be used (component table) can be defined, for example, (4) for a specification a1 or a2, a component x1 is always mounted. In addition, specification constraint information and the like for each selling country can be added, for example, (5) only a specification a1 or a3 can be selected for the product destined for a country α.

Note that, when various pieces of specification constraint information as described above are added, it is possible to calculate an upper limit and a lower limit of the ratio of a component and the ratio of a selling country, from the composition ratios of the grades and the specifications.

The production plan database 4 stores information necessary to determine a production plan, such as a current order entry situation, a future order entry prospect, feedback information based on past sales figures, and a sales trend for each country.

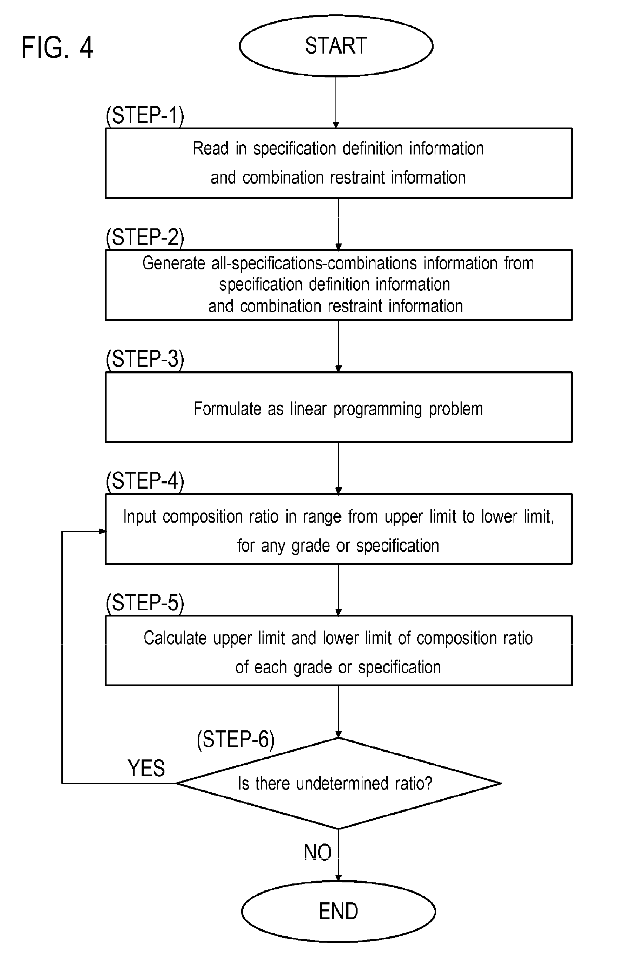

As shown in Fig. 4, in the product production planning method according to the embodiment of the present invention, the specification definition information J1 and the combination constraint information J2 are first read into the ratio calculation module 5 of the production plan designing system 1 (STEP-1).

As shown in Fig. 4, in the product production planning method according to the embodiment of the present invention, the production plan designing system 1 generates, from the specification definition information J1 and the combination constraint information J2, all-specifications-combination information J3 which covers searchingly and in chains all of the combinable patterns (STEP-2).

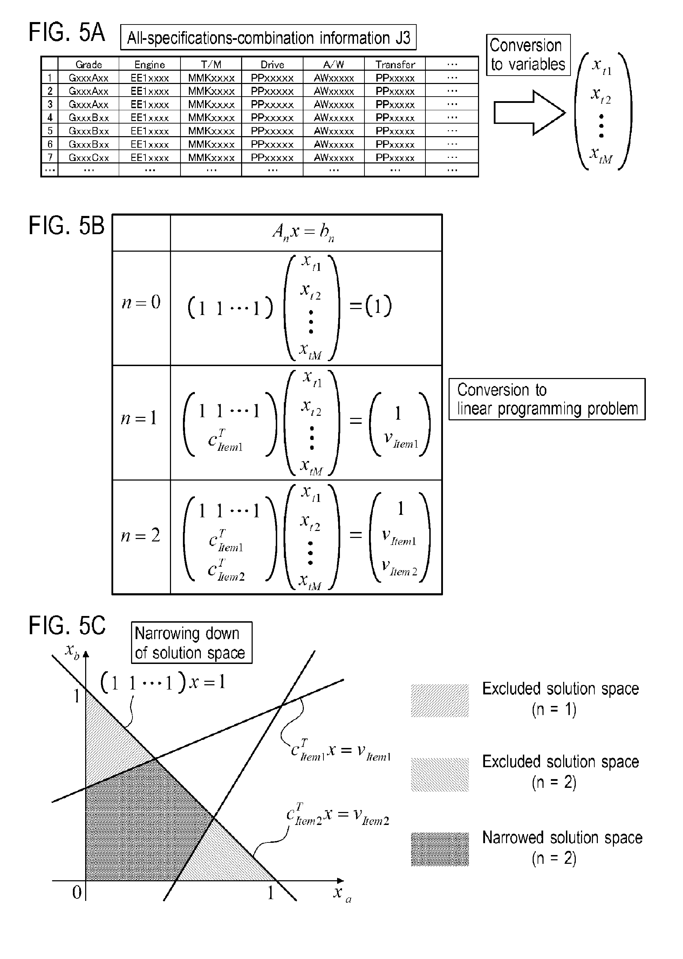

The all-specifications-combination information J3 is a mode as shown in Fig. 5A, for example.

Since the information of the patterns not combinable has been removed from the all-specifications-combination information J3, the information amount is reduced. Thus, a higher speed of calculation can be performed thereafter by the production plan designing system 1.

In the product production planning method according to an embodiment of the present invention, the production plan designing system 1 designs a production plan, based on the all-specifications-combination information J3.

Specifically, the all-specifications-combination information J3 is first converted to variables as shown in Fig. 5A, and are formulated as a linear programming problem as shown in Fig. 5B (STEP-3).

The solution space is narrowed down as shown in Fig. 5C to calculate the upper limits and the lower limits of the composition ratios of the grades and the specifications.

Since the all-specifications-combination information J3 at the minimum granularity is a variable, it is possible to flexibly represent, as a linear programming problem, the combination ratio of a single specification or a few specifications.

The product production planning method according to the embodiment of the present invention is characterized in a way of using a linear programming in which the composition ratio is not calculated by directly solving the linear programming problem but the upper limit and the lower limit of the composition ratio are each obtained as a solution. Note that, when the calculated upper limit and lower limit of the composition ratio are identical, the limits are automatically determined to be a uniquely determined composition ratio.

Specifically, the calculation of the upper limits and the lower limits of the composition ratios of each grade and each specification starts by inputting the composition ratio determined for any grade or specification (STEP-4).

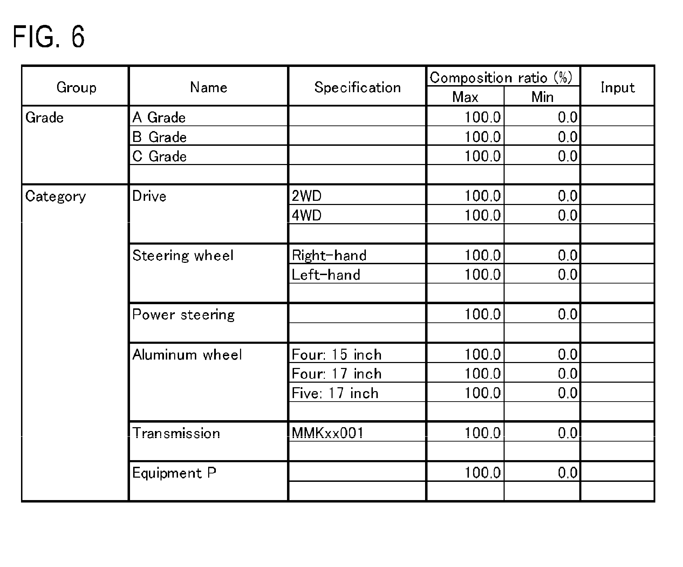

The determined composition ratio is specifically input on an input/output screen of the production plan designing system 1 as shown in Fig. 6.

The input/output screen of the production plan designing system 1 shows the upper limits and the lower limits (initially, 100% to 0%) of the composition ratios of the grades and the specifications, and also displays an input field for inputting the determined composition ratio.

The input/output screen shown in Fig. 6 shows the state before the composition ratio is input.

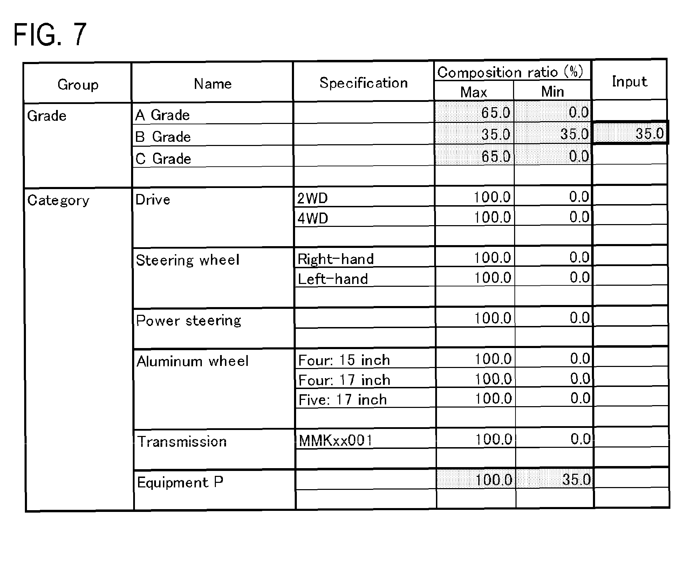

As shown in Fig. 7, the composition ratio of "B grade" is determined to be "35%" and is input at this point.

When the data "35%" is input in the input field for "B grade", the composition ratio of "B grade" is determined to be "35%".

In addition, due to the composition ratio of "B grade" being determined to be "35%", the composition ratios of "A grade" and "C grade" are automatically narrowed down to "65% to 0%" in relation to the composition ratio of "B grade".

With reference to the input/output screen shown in Fig. 7, the composition ratio of the specification "Equipment P" is automatically narrowed down to "100% to 35%" in relation to the composition ratio of "B grade".

This is because there is a constraint that the specification "Equipment P" is always selected for "B grade", and in addition this is based on the fact that, when the composition ratio of "B grade" is determined to be "35%", the composition ratio of the specification "Equipment P" cannot be "less than 35%".

Note that, the specification "Equipment P" is to select whether to adopt "Equipment P". Therefore, in this description, the name of the specification is written in the same words as the name of the category.

In the product production planning method according to the embodiment of the present invention, the composition ratio of one grade or one specification is input, and the upper limit and the lower limit of the composition ratio are calculated for each grade and each specification by the calculation method shown in Figs. 5A, 5B, and 5C (STEP-5).

Then, in the product production planning method according to the embodiment of the present invention, after the upper limits and the lower limits of the composition ratios are calculated, it is determined whether there is a grade or a specification whose composition ratio is not specified (STEP-6).

If there is a grade or a specification whose composition ratio is not specified, the flow returns to STEP-4 again, where a determined composition ratio within a range (i.e., a range in which consistency is secured) from the upper limit to the lower limit of the composition ratio is further input for any grade or specification (STEP-6 again).

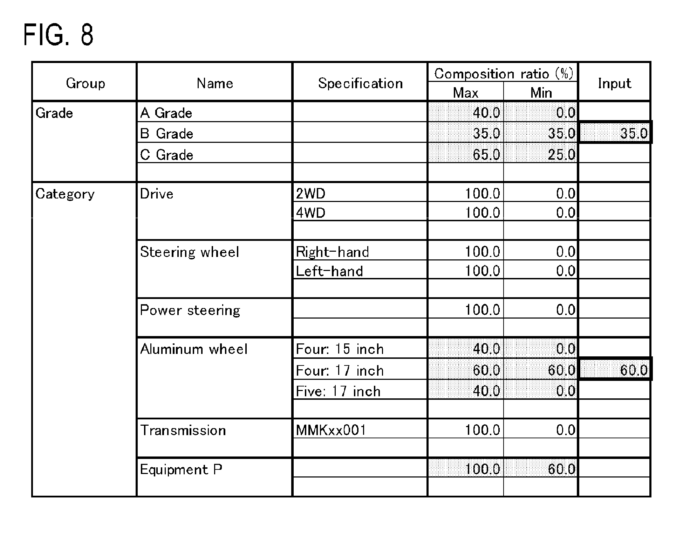

Fig. 8 shows the input/output screen of the production plan designing system 1 when the flow returns to STEP-6 again.

As shown in Fig. 8, the specification "Four-17 inch" is selected in the category "Aluminum wheel", and the composition ratio of the same specification is determined to be "60%" and is input.

When the data "60%" is input in the input field of the specification "Four-17 inch", the composition ratio of the specification "Four-17 inch" is determined to be "60%".

Then, due to the composition ratio of the specification "Four-17 inch" having being determined to be "60%", the composition ratios of the specification "Four-15 inch" and the specification "Five-17 inch" are each automatically narrowed down to "40% to 0%" in relation to the composition ratio of the specification "Four-17 inch".

With reference to the input/output screen shown in Fig. 8, the composition ratio of "A grade" is also automatically narrowed down to "40% to 0%" in relation to the composition ratio of the specification "Four-17 inch" of the category "Aluminum wheel".

This is because there is a constraint that the specification "Four-17 inch" cannot be selected for "A grade", and in addition, this is based on the fact that, when the composition ratio of the specification "Four-17 inch" is determined to be "60%", the composition ratio of "A grade" is determined to be "40% to 0%".

With reference to the input/output screen shown in Fig. 8, due to the upper limit and the lower limit of the composition ratio of "A grade" having been narrowed down to "40% to 0%", the upper limit and the lower limit of the composition ratio of "C grade" is further narrowed down to "65% to 25%".

In addition, with reference to the input/output screen shown in Fig. 8, the composition ratio of the specification "Equipment P" is automatically narrowed down to "100% to 60%" in relation to the composition ratio of "A grade". This is because there is a constraint that the specification "Equipment P" is always selected for the grades other than "A grade", and in addition, this is based on the fact that, when the composition ratio of "B grade" is determined to be "35%" and the composition ratio of "C grade" is determined to be "65% to 25%", the composition ratio of the specification "Equipment P" cannot be "less than 60%".

In this embodiment, there is still a specification whose composition ratio is not yet determined; therefore, the composition ratio, within a range (i.e., a range in which consistency is secured) from the upper limit to the lower limit of the composition ratio, is further input for any specification (STEP-6 again).

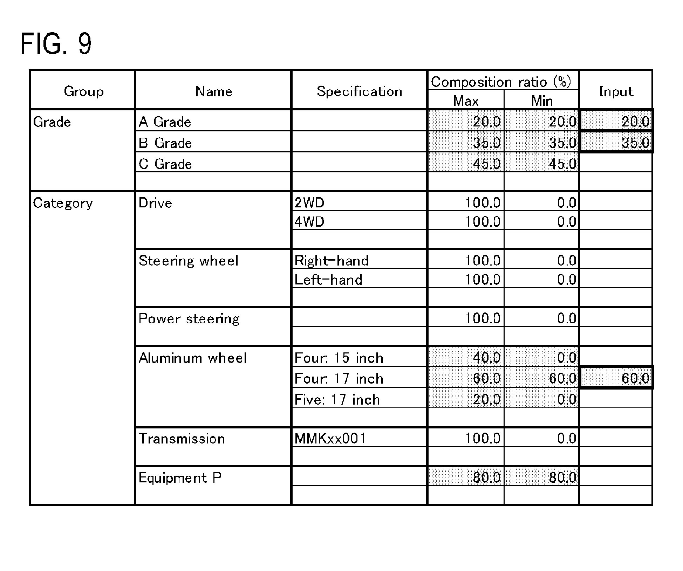

Fig. 9 shows the input/output screen at this point of time.

As shown in Fig. 9, the composition ratio of "A grade" is determined to be "20%" and is input.

When the data "20%" is input in the input field of "A grade", the composition ratio of "C grade" is automatically determined to be "45%".

Then, due to the composition ratio of "C grade" having been determined to be "45%", the composition ratio of the specification "Equipment P" is automatically determined to be "80%".

In addition, with reference to the input/output screen shown in Fig. 9, the composition ratio of the specification "Five-17 inch" is automatically narrowed down to "20% to 0%" in relation to the composition ratio of "A grade".

This is because there is a constraint that the specification "Five-17 inch" is always selected for "A grade", and in addition, this is based on the fact that the composition ratio of the specification "Five-17 inch" is determined due to composition ratio of "A grade" having been determined to be "20%".

As shown in Fig. 4, in the product production planning method according to the embodiment of the present invention, the loop from (STEP-4) to (STEP-6) is repeated, and the calculation of the composition ratio is finally finished at the point when all the grades and specifications whose composition ratios are not determined have disappeared.

In the product production planning method according to the embodiment of the present invention, the composition ratios are determined and input one by one for any grade or specification so that the production plan can be designed accurately while keeping the consistency among the composition ratios of the grades and the specifications.

In the product production planning method according to the embodiment of the present invention, since the preconditions are not many, the allowable range of the composition ratio is calculated in form of the upper limit and the lower limit of the composition ratio. Between the upper limit and the lower limit, an input is given based on past experience and other prediction methods so that a constraint condition of a composition ratio can be added.

As a result, although the range between the upper limit and the lower limit of a composition ratio is wide at first, the range between the upper limit and the lower limit of the composition ratio is gradually narrowed receiving influences from the calculation results of other relevant grades and specifications.

In the product production planning method according to the embodiment of the present invention, a value between the upper limit and the lower limit is repeatedly input as the composition ratio so that the range between the upper limit and the lower limit is gradually narrowed while keeping the consistency among the composition ratios, and, as a result, an accurate production plan can be achieved.

Note that, in the product production planning method according to the embodiment of the present invention, it is possible to deal with an arbitrary time axis and amount, and when an annual production plan, a mid-term production plan, and a monthly production plan are designed, the method can be applied to any of them.

Specifically, the product production planning method according to the embodiment of the present invention is a production planning method for designing a production plan on a product (the car model X in the present embodiment) in which a plurality of grades (grades A, B, and C) are set and a plurality of specifications for a plurality of categories (engine, transmission, and the like) are set for each of the grades A, B, and C, by determining a composition ratio of each of the grades A, B, and C and composition ratios of the plurality of specifications for the plurality of categories, the method including the steps of: generating all-specifications-combination information J3 which is information generated by combining the grades and the specifications in every combinable pattern; and calculating, by determining a composition ratio of any one of the grades or any one of the specifications (B grade in the present embodiment), upper limits and lower limits of composition ratios of the grade and the specification (the equipment P in the present embodiment) which relate to and are other than the determined B grade, based on the all-specifications-combination information J3.

Further, in the product production planning method according to the embodiment of the present invention, the upper limits and the lower limits of the composition ratios of the grade and the specification (the equipment P in the present embodiment) which are based on the all-specifications-combination information J3 and which relate to and are other than the determined B grade are calculated, as shown in Figs. 5A, 5B, and 5C, by converting the all-specifications-combination information J3 to a linear programming problem and by narrowing a solution space.

By such a production planning method, the upper limit and the lower limit of the composition ratio of the other specification "Equipment P" is calculated based on the all-specifications-combination information J3, and the composition ratio is determined within the range, whereby the consistency among the composition ratios can be secured.

Thus, on a product in which a plurality of grades are set and a plurality of specifications are further set for each grade, an accurate production plan can be achieved.

An accurate production plan can be achieved by enabling a combination constraint among grades and specifications to be considered so that the composition ratios of the determined grades and specifications and the actual composition ratios are consistent with each other. A method for designing a production plan on a car model in which a plurality of grades are set and a plurality of specifications for a plurality of categories are set for each of the grades by determining composition ratios of the grades and composition ratios of the specifications for the categories, includes: generating all-specifications-combination information which is information generated by combining the specifications in every combinable pattern; and calculating, by determining a composition ratio of any one of the grades, upper and lower limits of the composition ratio of an equipment, which is the specification related to and other than the determined grade, based on the all-specifications-combination information.

### Reference Signs List

J3: All-specifications-combination information

## Claims

1. A product production planning method for designing a production plan on a product in which a plurality of grades are set and a plurality of specifications for a plurality of categories are set for each grade, by determining composition ratios of the plurality of grades and composition ratios of the plurality of specifications for the plurality of categories, the method comprising:
generating all-specifications-combination information which is information generated by combining the grades and the specifications in every combinable pattern; and
calculating, by determining a composition ratio of any one of the grades or any one of the specifications, upper limits and lower limits of composition ratios of the grade and the specification which relate to and are other than the determined grade or specification, based on the all-specifications-combination information.

2. The product production planning method according to claim 1, wherein
the upper limits and the lower limits of the composition ratios of the grade and the specification which are based on the all-specifications-combination information and which relate to and are other than the determined grade or specification are calculated by converting the all-specifications-combination information to a linear programming problem and by narrowing a solution space.
